# EUROPÄISCHE PATENTSCHRIFT

(11) **EP 3 830 423 B1**
(45) Veröffentlichungstag und Bekanntmachung des Hinweises auf die Patenterteilung: **28.06.2023**
(21) Anmeldenummer: 19737028.1
(22) Anmeldetag: 01.07.2019
(51) Int. Cl.: F04D 29/051, F01D 5/04, F01D 25/16, F01D 25/22, F02C 7/06

(54) **TURBOMASCHINE**
TURBOMACHINE
TURBOMASCHINE

(30) Priorität: 27.07.2018 DE 102018212570
(43) Veröffentlichungstag der Anmeldung: 09.06.2021
(73) Patentinhaber: Robert Bosch GmbH, 70442 Stuttgart (DE)
(72) Erfinder: STIRBAN, Alin, 71034 Boeblingen (DE); DREIZLER, Martin, 70197 Stuttgart (DE); DAIMER, Guido, 71686 Remseck (DE); IEPURE, Ioan Liviu, 70563 Stuttgart (DE); TRAUTMANN, Juliane, 71665 Vaihingen (DE); FOERSTER, Felix, 75433 Maulbronn (DE); MAYER, Michael, 70565 Stuttgart (DE)
(86) Internationale Anmeldenummer: PCT/EP2019/067550
(87) Internationale Veröffentlichungsnummer: WO 2020/020578

(56) Entgegenhaltungen:
- DE-A1-102010 048 305
- DE-A1-102014 104 828
- DE-A1-102016 210 782
- DE-T5-112012 002 901
- US-B2- 8 376 722

## Beschreibung

Die vorliegende Erfindung betrifft eine Turbomaschine, welche beispielsweise in einem Abwärmerückgewinnungssystem zur Abwärmenutzung einer Brennkraftmaschine oder als Verdichter für ein Brennstoffzellensystem verwendet werden kann.

### Stand der Technik

Aus der Offenlegungsschrift DE 10 2010 048305 A1 ist eine Turbomaschine bekannt, die ein Turbogehäuse und ein um eine Drehachse beweglich gelagerten Laufrad aufweist, das an einer Vorderseite einen Einströmbereich und einen Ausströmbereich eines Arbeitsmediums definiert und welches Laufrad mit einer Welle wirkverbunden ist. Das Laufrad bildet mit der Lagerspitze ein als einseitiges Gaslager ausgeführtes Axiallager aus, wobei das Laufrad bzw. die Welle durch ein Vorspannmittel in Richtung des Axiallagers vorgespannt ist. Das Vorspannmittel ist dabei als elastisches Mittel in Form einer Spiralfeder ausgebildet.

Durch die DE 10 2014 104828 A1 ist ebenfalls eine Turbomaschine bekannt, die ein Turbogehäuse und ein um eine Drehachse beweglich gelagerten Laufrad aufweist, das an einer Vorderseite einen Einströmbereich und einen Ausströmbereich eines Arbeitsmediums definiert und welches Laufrad mit einer Welle wirkverbunden ist. Ein mit dem Rotor mitrotierender Lagerkamm bildet mit entsprechend geneigten Laufflächen an außenliegenden Lagerringen ein als einseitiges Gaslager ausgeführtes Axiallager.

Das Axiallager ist durch ein Vorspannmittel vorgespannt.

Das Vorspannmittel ist dabei durch Federelemente gebildet.

Durch die DE 11 2012 002901 T5 ist ebenfalls eine Turbomaschine bekannt, die ein Turbogehäuse und ein um eine Drehachse beweglich gelagerten Laufrad aufweist, das an einer Vorderseite einen Einströmbereich und einen Ausströmbereich eines Arbeitsmediums definiert und welches Laufrad mit einer Welle wirkverbunden ist. Die

Welle bildet mit dem Turbogehäuse ein als

Gaslager ausgeführtes Axiallager aus, wobei die Welle durch ein Vorspannmittel in Richtung des Axiallagers vorgespannt ist. Das Vorspannmittel ist dabei durch ein Federpaket gebildet.

Der vorliegenden Erfindung liegt die Aufgabe zugrunde, eine Turbomaschine mit einer solchen Lagerung bereitzustellen, so dass bei vereinfachter Montage des Rotors in die Turbomaschine eine zuverlässige Funktionsweise und ein verbesserter Wirkungsgrad der Turbomaschine erzielbar sind.

### Offenbarung der Erfindung

Die Erfindung wird durch die beiliegenden Ansprüche definiert. Erfindungsgemäß ist vorgesehen, dass das Vorspannmittel einen ersten Magneten und einen zweiten Magneten, vorzugsweise einen Permanentmagneten oder einen Elektromagneten, umfasst. Diese können auf einfache Weise und mit geringem Bauraumbedarf in die Turbomaschine integriert werden.

Vorteilhafterweise ist der erste Magnet in der Welle angeordnet und wechselwirkt magnetisch mit dem in dem Turbogehäuse angeordneten zweiten Magneten. Dadurch sind die Magneten in vorteilhafter Weise so zueinander angeordnet sind, dass sie sich gegenseitig abstoßen und so das Laufrad bzw. die Welle in Richtung des Axiallagers vorspannen.

In weiterer Ausgestaltung der Erfindung ist es vorteilhaft vorgesehen, dass das Vorspannmittel einen Druckteiler umfasst, welcher als ein Absatz des Turbogehäuses ausgebildet ist und welcher Absatz mit einer Rückseite des Laufrads einen Dichtspalt ausbildet. So kann die Axialkraft auf das Laufrad dadurch verringert werden, dass der Druck auf der Rückseite des Laufrads durch den Absatz im Vergleich zur Vorderseite des Laufrads im Einströmbereich verringert wird. So kann der Verschleiß am Laufrad reduziert und die Funktionsweise der Turbomaschine optimiert werden.

In vorteilhafter Weiterbildung der Erfindung umfasst das Vorspannmittel einen Druckteiler, welcher als mindestens ein Gleitelement ausgebildet ist und zwischen einer Rückseite des Laufrads und dem Turbogehäuse angeordnet ist. Vorteilhafterweise ist das mindestens eine Gleitelement mittels einer Feder mit einer Kraft in Richtung des Axialspalts beaufschlagt. So kann die Axialkraft auf das Laufrad dadurch verringert werden, dass der Druck auf der Rückseite des Laufrads im Vergleich zur Vorderseite des Laufrads im Einströmbereich verringert wird, was zu einer Verschleißreduzierung und einer erhöhten Lebensdauer des Laufrads führt.

In weiterer Ausgestaltung der Erfindung ist es vorgesehen, dass im Ausströmbereich eine Nabe der Welle mit einem Absatz des Turbogehäuses einen Axialspalt ausbildet und so das Axiallager für das Laufrad ausbildet. Die Nabe der Welle kann mit hohen mechanischen Kräften beaufschlagt werden, so dass ohne Verschleiß der Welle ein einseitiges Axiallager ausgebildet wird und so eine verbesserte Funktionsweise der Turbomaschine erzielt wird.

In vorteilhafter Weiterbildung der Erfindung ist es vorgesehen, dass eine Rückseite des Laufrads mit dem Turbogehäuse einen Axialspalt und somit das Axiallager ausbildet. So kann die Lagerung des Laufrads in der Turbomaschine gewährleistet und dadurch eine effektive Funktionsweise der Turbomaschine erzielt werden.

In vorteilhafter Weiterbildung begrenzen die Welle bzw. das Laufrad und das Turbogehäuse einen Leckageraum, welcher mit dem Axialspalt verbunden ist. Durch den Leckageraum wird eine optimale Ausbildung des Gaslagers im Axialspalt erzielt, wodurch die Funktionsweise des Laufrads verbessert wird.

In vorteilhaften Verwendungen ist die Turbomaschine in einem Brennstoffzellensystem angeordnet. Die Turbomaschine ist dazu als Turbokompressor bzw. das Laufrad als Verdichter ausgeführt. Das Brennstoffzellensystem weist eine Brennstoffzelle, eine Luftzuführungsleitung zum Zuführen eines Arbeitsmediums in Form eines Oxidationsmittels in die Brennstoffzelle und eine Abgasleitung zum Abführen des Oxidationsmittels aus der Brennstoffzelle auf. Der Verdichter ist in der Luftzuführungsleitung angeordnet. Die Luftzuführungsleitung dient dabei der Zuströmung des Arbeitsfluids bzw. Oxidationsmittels in die Brennstoffzelle, und die Abgasleitung dient der Abfuhr des Oxidationsmittels bzw. des reagierten Oxidationsmittels bzw. einem Gemisch daraus aus der Brennstoffzelle. Der Turbokompressor ist gemäß einer der oben beschriebenen Ausführungsformen gestaltet.

Die beschriebenen Ausführungen der Turbomaschine sind vorzugsweise in einem Abwärmerückgewinnungssystem eingesetzt. Das Abwärmerückgewinnungssystem weist einen ein Arbeitsmedium führenden Kreislauf auf, der in Flussrichtung des Arbeitsmediums eine Fluidpumpe, einen Verdampfer, eine Turbomaschineneinheit und einen Kondensator umfasst. Die Turbomaschineneinheit umfasst weiterhin einen Generator und die erfindungsgemäße Turbomaschine. Durch Verwendung der erfindungsgemäßen Turbomaschine kann die Effizienz des Abwärmerückgewinnungssystems gesteigert werden.

### Zeichnungen

Im Folgenden sind nur die wesentlichen Bereiche dargestellt.
**Fig.1** zeigt schematisch ein bekanntes Abwärmerückgewinnungssystem.
**Fig.2** zeigt einen Schnitt einer Turbomaschineneinheit des Abwärmerückgewinnungssystems aus der **Fig.1** in perspektivischer Ansicht.
**Fig.3** zeigt ein erstes Ausführungsbeispiel einer erfindungsgemäßen Turbomaschine der Turbomaschineneinheit im Bereich A aus der **Fig.2** im Längsschnitt.
**Fig.4** zeigt ein zweites Ausführungsbeispiel einer erfindungsgemäßen Turbomaschine der Turbomaschineneinheit im Bereich A aus der **Fig.2** im Längsschnitt.
**Fig.5** zeigt ein drittes Ausführungsbeispiel einer erfindungsgemäßen Turbomaschine der Turbomaschineneinheit im Bereich A aus der **Fig.2** im Längsschnitt.
**Fig.6** zeigt schematisch ein bekanntes Brennstoffzellensystem.

### Beschreibung der Ausführungsbeispiele

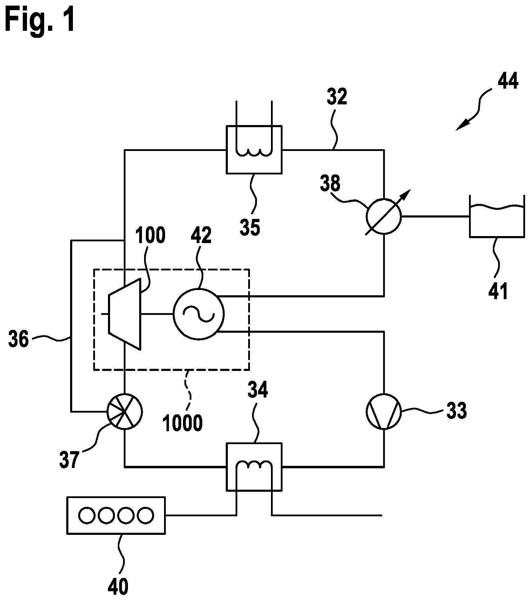

**Fig.1** zeigt schematisch ein bekanntes Abwärmerückgewinnungssystem 44 einer Brennkraftmaschine 40, wobei nur die wesentlichen Bereiche dargestellt sind.

Das Abwärmerückgewinnungssystem 44 weist einen ein Arbeitsmedium führenden Kreislauf 32 auf, der in Flussrichtung des Arbeitsmediums eine Fluidpumpe 33, einen Verdampfer 34, eine Turbomaschine 100 und einen Kondensator 35 umfasst. Der Kondensator 35 kann dabei beispielsweise an ein Kühlsystem einer Brennkraftmaschine 40 gekoppelt sein.

Parallel zur Turbomaschine 100 ist eine Bypassleitung 36 geschaltet. Mittels eines Bypassventils 37 kann der Massenstrom des Arbeitsmediums nach Bedarf auf die Turbomaschine 100 und/oder die Bypassleitung 36 aufgeteilt werden.

Die Turbomaschine 100 ist hier Teil einer Turbomaschineneinheit 1000. Die Turbomaschineneinheit 1000 umfasst zusätzlich einen Generator 42, optional weiterhin auch das Bypassventil 37 und die Bypassleitung 36. Der Generator 42 wandelt die in der Turbomaschine 100 erzeugte mechanische Energie in elektrische Energie um und speist damit nicht dargestellte Verbraucher bzw. ein Speichermedium.

Optional kann das Abwärmerückgewinnungssystem 44 weiterhin - wie in **Fig.1** gezeigt - einen Tank 41 aufweisen, von dem mittels eines Zumessventils 38 Arbeitsmedium in den Kreislauf 32 eingeleitet werden kann, bzw. in den überschüssiges Arbeitsmedium aus dem Kreislauf 32 zurückgeführt werden kann. Alternativ kann der Tank 41 dabei auch in dem Kreislauf 32 angeordnet sein.

### Funktionsweise des Abwärmerückgewinnungssystems

Das flüssige Arbeitsmedium wird von der Fluidpumpe 33 unter Druck zu dem Verdampfer 34 und weiter zur Turbomaschine 100 gefördert. Der Verdampfer 34 ist an eine Abgasleitung der Brennkraftmaschine 40 angeschlossen, nutzt also die Wärmeenergie des Abgases der Brennkraftmaschine 40 und verdampft damit das Arbeitsmedium des Kreislaufs 32. Das gasförmige Arbeitsmedium wird anschließend in der Turbomaschine 100 unter Abgabe mechanischer Energie entspannt. Im Kondensator 35 wird das Arbeitsmedium vollständig verflüssigt und gelangt so wieder zur Fluidpumpe 33.

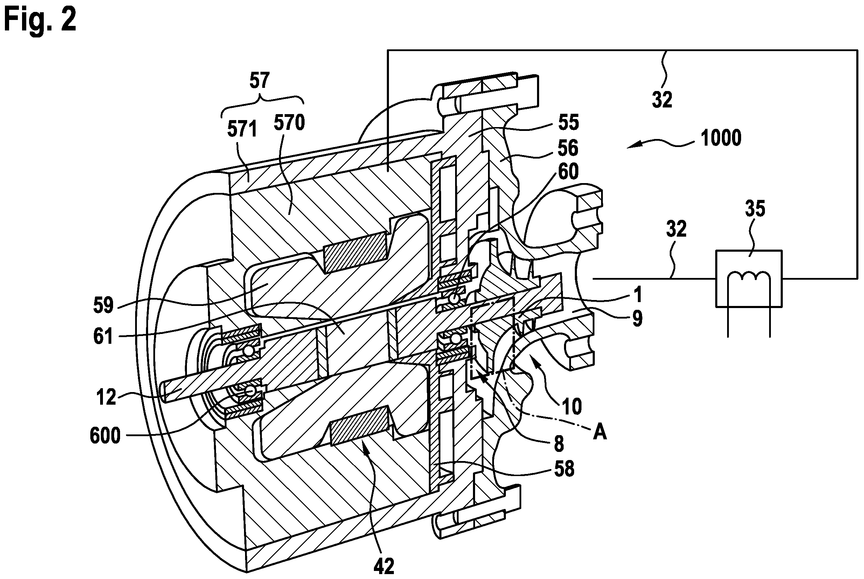

Vorzugsweise weisen die Turbomaschine 100 und der Generator 42 eine gemeinsame Welle 12 auf, so dass im Generator 42 auf einfache Weise mittels eines auf der Welle 12 angeordneten Rotors 61 und eines Stators 59 elektrische Energie erzeugt werden kann (siehe **Fig.2**).

Die Bypassleitung 36 ist parallel zur Turbomaschine 100 angeordnet. Je nach Betriebszuständen der Brennkraftmaschine 40 und des Abwärmerückgewinnungssystems 44 und daraus resultierender Größen, beispielsweise Temperaturen des Arbeitsmediums, wird das Arbeitsmedium der Turbomaschine 100 zugeführt oder durch die Bypassleitung 34 an der Turbomaschine 100 vorbeigeführt.

**Fig.2** zeigt einen Schnitt der Turbomaschineneinheit 1000 aus der **Fig.1** in perspektivischer Ansicht, wobei nur die wesentlichen Bereiche dargestellt sind. Die Turbomaschineneinheit 1000 umfasst die Turbomaschine 100 und den Generator 42. Die Turbomaschine 100 ist als Radialturbine ausgeführt, wobei der Strömungsausgang hier aus der Radialturbine vom Generator 42 wegführt.

Die Turbomaschineneinheit 1000 weist ein Gehäuse 55 auf. In der Ausführung der **Fig.2** ist das Gehäuse 55 mehrteilig ausgeführt und umfasst ein Turbogehäuse 56, ein Generatorgehäuse 57 und eine Statorplatte 58. Das Turbogehäuse 56 umgibt im Wesentlichen die Turbomaschine 100. Das Generatorgehäuse 57 umgibt den Stator 59. Die Statorplatte 58 ist zwischen dem Turbogehäuse 56 und dem Generatorgehäuse 57 verspannt und fixiert zusammen mit dem Generatorgehäuse 57 den Stator 59 innerhalb des Gehäuses 55.

Ein Lager 60 zur Lagerung der Welle 12 ist radial durch das Generatorgehäuse 57 positioniert und axial zwischen dem Generatorgehäuse 57 und der Statorplatte 58 positioniert, also zwischen der Turbomaschine 100 und dem Generator 42 angeordnet. Ein weiteres Lager 600 ist auf der anderen Seite des Generators 42 angeordnet.

Das Generatorgehäuse 57 ist zweiteilig ausgeführt, mit einem Innenkörper 570 und einem Außenmantel 571.

Der Strömungsweg des Arbeitsmediums in der Ausführung der **Fig.2** ist der folgende: Vom Verdampfer 34 kommend strömt das gasförmige Arbeitsmedium durch einen Einströmbereich 8 radial in die Turbomaschine 100 ein und axial aus dieser durch einen Ausströmbereich 9 wieder aus, in der Darstellung der **Fig.2** nach rechts. Dadurch wird in der Turbomaschine 100 ein Laufrad 1 angetrieben. Anschließend wird das Arbeitsmedium nach Austritt aus der Turbomaschine 100 im Kondensator 35 vollständig verflüssigt.

In vorteilhaften Ausführungen wird das Laufrad 1 der **Fig.2** seitenverkehrt angeordnet, so dass die Abströmung in Richtung des Generators 42 erfolgt. Die Strömung des Arbeitsmediums aus der Turbomaschineneinheit 1000 erfolgt dann vorzugsweise in radialer Richtung zwischen Turbogehäuse 56 und Generatorgehäuse 57. Der Ausströmbereich 9 kann dazu von dem Turbogehäuse 56 und/oder dem Generatorgehäuse 57 begrenzt sein. Das Lager 60 ist in diesen Ausführungen vorteilhafterweise am rechten Rand der Turbomaschineneinheit 1000 angeordnet.

In vorteilhaften Weiterbildungen weist die Turbomaschineneinheit 1000 dann eine Isolierung zwischen der Turbomaschine 100 und dem Generator 42 auf. Dies kann beispielsweise durch ein Material des Gehäuses 55 mit geringer Wärmeleitfähigkeit erfolgen, oder durch eine zusätzliche Beschichtung des Gehäuses 55 oder durch ein weiteres Bauteil des Gehäuses 55. Die Isolierung kann dabei auch Lufteinschlüsse innerhalb des Gehäuses 55 umfassen. Die Isolierung hat die Aufgabe das relativ heiße, durch den Ausströmbereich 9 aus der Turbomaschine 100 ausströmende Arbeitsmedium thermisch von dem Generator 42 zu trennen, so dass die Effizienz des Generators 42 nicht reduziert wird.

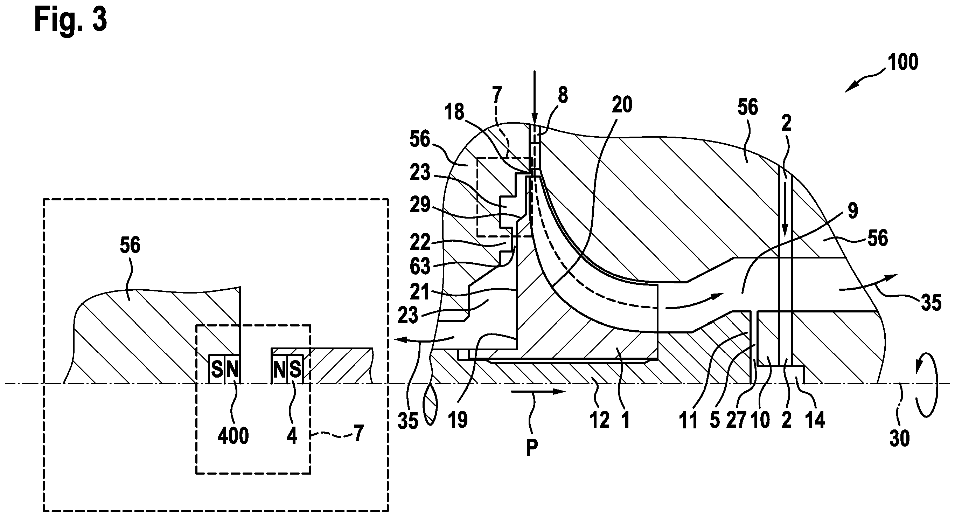

**Fig.3** zeigt eine vergrößerte Ansicht Ader Turbomaschine 100 aus der **Fig.2**. Es zeigt ein erstes Ausführungsbeispiel der erfindungsgemäßen Turbomaschine 100 im Längsschnitt. Die Turbomaschine 100 weist das Turbogehäuse 56 auf.

Das Laufrad 1 ist in dem Turbogehäuse 56 um eine Drehachse 30 drehbar gelagert angeordnet und hier mit der Welle 12 fest verbunden, wobei die Welle 12 das Turbogehäuse 56 durchsetzt. Die Darstellung ist vereinfacht dargestellt und auf den Längsschnitt oberhalb der Drehachse 30 begrenzt und kann zur Vervollständigung des Längsschnitts um die Drehachse 30 gespiegelt werden.

Das Laufrad 1 weist eine Vorderseite 20 und eine Rückseite 21 auf. Die Vorderseite 20 ist bogenförmig ausgebildet und definiert so den Einströmbereich 8 und den Ausströmbereich 9 für das Arbeitsmedium, in der Darstellung von **Fig.3** von oben und nach rechts. Die Rückseite 21 weist eine Stufe 29 auf, die in einen ebenen Abschnitt 19 übergeht. Die der Rückseite 21 des Laufrads 1 zugewandte Seite des Turbogehäuses 56 ist stufenförmig ausgebildet. Eine Stufe 22 des Turbogehäuses 56 bildet zusammen mit dem ebenen Abschnitt 19 des Laufrads 1 einen Dichtspalt 63 aus.

Die Rückseite 21 des Laufrads 1 und das Turbogehäuse 56 begrenzen einen Leckageraum 23, der durch den Dichtspalt 63 aufgeteilt wird. Der Leckageraum 23 weist eine hydraulische Verbindung zum Kondensator 35 auf.

Das Laufrad 1 weist am Ausströmbereich 9 eine Nabe 11 auf, die mit einem Absatz 10 des Turbogehäuses 56 einen Axialspalt 5 und damit ein Axiallager 27 ausbildet. Die Nabe 11 des Laufrads 1 und das Turbogehäuse 56 begrenzen einen weiteren Leckageraum 14, der mittels eines in dem Turbogehäuse 56 ausgebildeten Kanals 2 und mittels des Axialspalts 5 mit dem Ausströmbereich 9 verbunden ist. Der Kanal 2 wird durch den Ausströmbereich 9 unterbrochen und führt an der dem weiteren Leckageraum 14 gegenüberliegenden Seite aus der Turbomaschine 100 hinaus. Das Axiallager 27 ist vorzugsweise als geschlossene Lagerscheibe an der Nabe 11 des Laufrads 1 ausgebildet, wodurch hohe Tragkräfte erzielt werden können. Weiterhin können dabei beispielsweise verschiedene Luftlagertypen ausgebildet werden, beispielsweise Spiralrillen, Folienlager, Keillager oder extern druckbeaufschlagte Lager, sogenannte EP ("external pressurized") Lager. Hier ist ein EP Lager ausgebildet.

Der Strömungsweg des Arbeitsmediums ist der folgende: Vom Verdampfer 34 kommend strömt das gasförmige Arbeitsmedium in den Einströmbereich 8 der Turbomaschine 100. An einer Kante 18 des Turbogehäuses 2 im Einströmbereich 8 zwischen dem Laufrad 1 und dem Turbogehäuse 2 teilt sich das gasförmige Arbeitsmedium in zwei Strömungspfade auf: der eine Strömungspfad führt an der Vorderseite 20 und der andere Strömungspfad an der Rückseite 21 des Laufrads 1 vorbei.

An der Rückseite 21 strömt das gasförmige Arbeitsmedium in den Leckageraum 23 ein und gelangt mit hohem Druck in Richtung des Dichtspalts 63. Durch den Dichtspalt 63 wird das Arbeitsmedium entspannt und strömt danach weiter in Richtung des Kondensators 35.

An der Vorderseite 20 strömt das gasförmige Arbeitsmedium bogenförmig entlang des Laufrads 1 in Richtung des Ausströmbereichs 9 und treibt dadurch das Laufrad 1 bzw. der Welle 12 an. Das gasförmige Arbeitsmedium wird so druckentspannt. Anschließend wird das gasförmige Arbeitsmedium aus der Turbomaschine 100 in Richtung des Kondensators 35 geleitet und dort vollständig verflüssigt. Ein Teil des gasförmigen Arbeitsmediums strömt in den Axialspalt 5 in Richtung des weiteren Leckageraums 14, wobei dieser auch hydraulisch mit dem Kondensator 35 verbunden ist. Durch den Kanal 2 wird extern Druck angelegt, indem beispielsweise ein Gas darüber in den weiteren Leckageraum 14 eingeleitet, so dass der Druck in dem Axialspalt 5 abfällt. Die externe Zufuhr von einem Gas über den Kanal 2 ist lediglich bei einem EP Lager notwendig, um einen tragenden Luftfilm zu erhalten. Für andere Lagertypen kann die externe Zufuhr über den Kanal 2 zur Kühlung verwendet werden.

Mittels des Kanals 2 und dem weiteren Leckageraum 14 wird in dem Axialspalt 5 das Axiallager 27 für das Laufrad 1 ausgebildet. Das Axiallager 27 ist hier als Gaslager, beispielsweise Luftlager, ausgebildet und bildet ein einseitiges Gaslager für das Laufrad 1 aus. Je nach geometrischer Ausführung des Absatzes 22 des Turbogehäuses 56 kann die resultierende Kraft auf das Laufrad 1 in Richtung des Axialspalts 5 beaufschlagt werden.

In dieser Ausführung ist ein Vorspannmittel 7, hier ein als Absatz 22 ausgebildeter Druckteiler, zusätzlich zu einem nachfolgend beschriebenen Vorspannmittel 7 mit Magneten vorhanden, das das Laufrad 1 bzw. die Welle 12 mit einer Kraft in Richtung des Axiallagers 27 vorspannt (siehe Pfeil P in **Fig.3**).

Erfindungsgemäß ist in der Welle 12 als Vorspannmittel 7 ein erster Magnet 4, beispielsweise ein Permanentmagnet oder ein Elektromagnet, angeordnet werden, welcher mit einem zweiten Magneten 400, beispielsweise einem Permanentmagneten oder einem Elektromagneten, im Turbogehäuse 56 magnetisch wechselwirkt. Diese können so zueinander angeordnet werden, dass sie sich gegenseitig abstoßen und so das Laufrad 1 bzw. die Welle 12 in Richtung des Axiallagers 27 vorgespannt wird. So kann eine resultierende Kraft auf das Laufrad 1 bzw. die Welle 12 in Richtung des Axiallagers 27 sichergestellt werden. Bei Verwendung von Elektromagneten 4, 400 kann die Kraft auf das Laufrad 1 bzw. die Welle 12 variabel eingestellt werden.

In einer alternativen Ausführung kann auch einer der Magnete 4, 400, ausgebildet als Permanentmagnete, beweglich angeordnet sein, um die resultierende Kraft auf das Laufrad 1 bzw. die Welle 12 zu variieren.

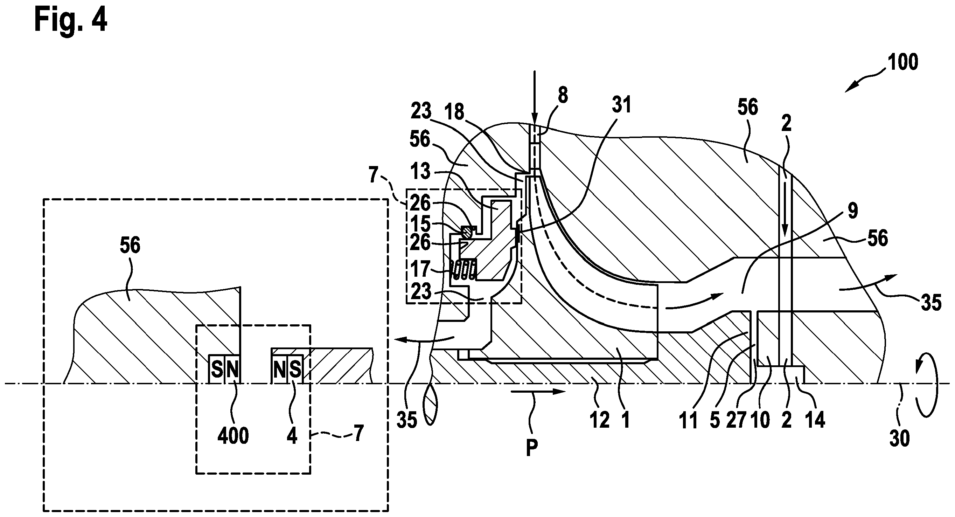

**Fig.4** zeigt ebenfalls eine vergrößerte Ansicht Ader Turbomaschine 100 aus der **Fig.2**. Es zeigt ein zweites Ausführungsbeispiel der erfindungsgemäßen Turbomaschine 100 im Längsschnitt, wobei zur Vereinfachung der Längsschnitt nur oberhalb der Drehachse 30 gezeigt ist und zur Vervollständigung des Längsschnitts um die Drehachse 30 gespiegelt werden kann. Das zweite Ausführungsbeispiel entspricht in Aufbau und Funktionsweise weitestgehend dem ersten Ausführungsbeispiel aus der **Fig.3****.**

Im Gegensatz zum ersten Ausführungsbeispiel ist hier an der Rückseite 21 des Laufrads 1 anstatt dem Absatz 22 des Turbogehäuses 56 und dem Dichtspalt 63 ein Gleitelement 13 angeordnet. Das Gleitelement 13 ist hier als ein aus Graphit hergestellter Dichtring ausgebildet und stützt sich zwischen dem Turbogehäuse 56 und der Rückseite 21 des Laufrads 1 ab. In einer Ausnehmung 26 des Turbogehäuses 56 ist ein weiteres Gleitelement 15, beispielsweise ein Dichtring, angeordnet, wobei sich das zweite Gleitelement 15 an dem ersten Gleitelement 13 abstützt.

Weiterhin ist in der Ausnehmung 26 eine Feder 17 angeordnet, welche das erste Gleitelement 13 mit einer Kraft in Richtung der Rückseite 21 des Laufrads 1 drückt. An der Rückseite 21 des Laufrads 1 ist eine Ausnehmung 31 ausgebildet, die zumindest teilweise durch das erste Gleitelement 13 abgedeckt ist. Hier ist das erste Gleitelement 13, das zweite Gleitelement 15 und die Feder 17 als Vorspannmittel 7 ausgebildet, welches das Laufrad 1 bzw. die Welle 12 mit einer Kraft in Richtung des Axiallagers 27 vorspannt (siehe Pfeil P in **Fig.4**).

Zusätzlich ist, wie im ersten Ausführungsbeispiel aufgeführt, als Vorspannmittel 7 ein erster Magnet 4 mit einem zweiten Magneten 400 vorhanden, beispielsweise ausgebildet als Permanentmagnete oder Elektromagnete, die wechselwirken, so dass das Laufrad 1 bzw. die Welle 12 in Richtung des Axiallagers 27 vorgespannt wird.

Der Strömungsweg des Arbeitsmediums ist prinzipiell bis auf den Strömungspfad an der Rückseite 21 des Laufrads 1 derselbe wie im ersten Ausführungsbeispiel. Hier strömt das gasförmige Arbeitsmedium um das erste Gleitelement 13, das zweite Gleitelement 15 und die Feder 17 herum, um dann die Turbomaschine 100 in Richtung des Kondensators 35 zu verlassen. Auch in diesem Ausführungsbeispiel wird das gasförmige Arbeitsmedium durch die Gleitelemente 13, 15 druckentspannt.

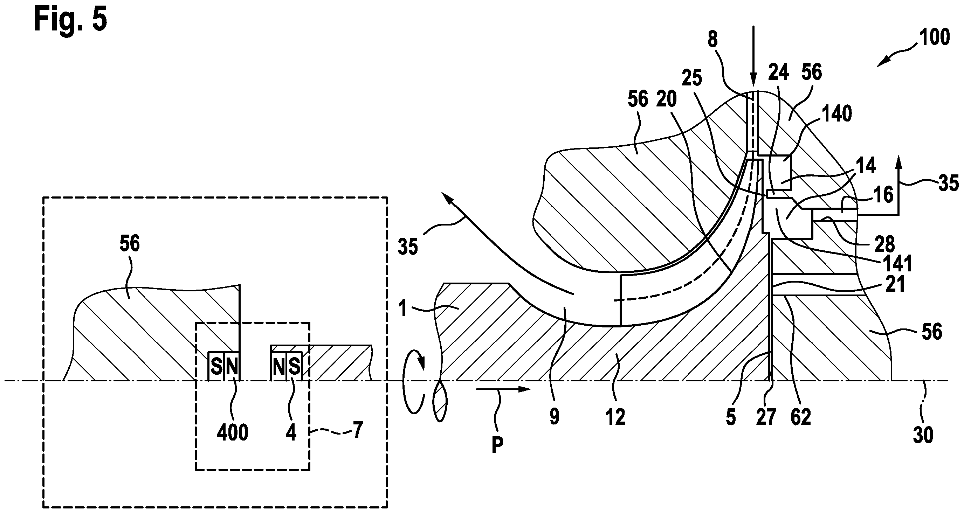

**Fig.5** zeigt ebenfalls eine vergrößerte Ansicht Ader Turbomaschine 100 aus der **Fig.2****.** Es zeigt ein drittes Ausführungsbeispiel der erfindungsgemäßen Turbomaschine 100 im Längsschnitt, wobei zur Vereinfachung der Längsschnitt nur oberhalb der Drehachse 30 gezeigt ist und zur Vervollständigung des Längsschnitts um die Drehachse 30 gespiegelt werden kann.

Das Laufrad 1 ist in dem Turbogehäuse 56 um die Drehachse 30 drehbar gelagert angeordnet und hier einteilig mit der Welle 12 ausgebildet, wobei die Welle 12 das Turbogehäuse 56 durchsetzt. Weiterhin weist das Laufrad 1 ebenso wie in den vorherigen Ausführungsbeispielen eine Vorderseite 20 und eine Rückseite 21 auf. Die Vorderseite 20 ist bogenförmig ausgebildet und definiert so den Einströmbereich 8 und den Ausströmbereich 9 für das Arbeitsmedium, in der Darstellung von **Fig.3** von oben und nach links. Die Rückseite 21 ist ebenförmig und mit einer Stufe 28 ausgeführt. Weiterhin bilden die Rückseite 21 des Laufrads 1 und das Turbogehäuse 56 einen Axialspalt 5 aus, das ein Axiallager 27 für das Laufrad 1 bildet.

Weiterhin begrenzen die Rückseite 21 des Laufrads 1 und das Turbogehäuse 56 einen Leckageraum 14, welcher durch einen Absatz 24 in einen ersten Leckageteilraum 140 und einen zweiten Leckageteilraum 141 aufgeteilt ist. Der zweite Leckageteilraum 141 ist mit einem in dem Turbogehäuse 56 ausgebildeten Kanal 16 verbunden, über welchen in dem Leckageraum 14 gesammelte Leckage aus der Turbomaschine 100 in Richtung des Kondensators 35 geleitet werden kann. Der Absatz 10 ist hier als umlaufender Grat an dem Gehäuseteil 2 ausgebildet und bildet mit der Rückseite 21 des Laufrads 1 einen Dichtspalt 25 aus.

Der Strömungsweg des Arbeitsmediums ist der folgende: Vom Verdampfer 34 kommend strömt das gasförmige Arbeitsmedium in den Einströmbereich 8 der Turbomaschine 100. An der Kante 18 des Turbogehäuses 2 im Einströmbereich 8 zwischen dem Laufrad 1 und dem Turbogehäuse 2 teilt sich das gasförmige Arbeitsmedium in zwei Strömungspfade auf, der eine Strömungspfad führt an der Vorderseite 20 und der andere Strömungspfad an der Rückseite 21 des Laufrads 1 vorbei.

An der Vorderseite 20 strömt das gasförmige Arbeitsmedium bogenförmig entlang des Laufrads 1 in Richtung des Ausströmbereichs 9 und wird durch das Antreiben des Laufrads 1 bzw. der Welle 12 entspannt. Anschließend wird das gasförmige Arbeitsmedium aus der Turbomaschine 100 in Richtung des Kondensators 35 geleitet und dort vollständig verflüssigt.

An der Rückseite 21 strömt das gasförmige Arbeitsmedium in den ersten Leckageteilraum 140 ein und gelangt mit hohem Druck an den Absatz 24. Durch den Dichtspalt 25 wird das Arbeitsmedium druckentspannt und strömt in den zweiten Leckageteilraum 141 ein. Dort strömt es einerseits in den Axialspalt 5 zwischen dem Laufrad 1 und dem Turbogehäuse 56, so dass das Axiallager 27 als Gaslager ausgebildet ist. Andererseits strömt das Arbeitsmedium über den Kanal 16 hinaus aus der Turbomaschine 100 in Richtung des Kondensators 35. Ist das Axiallager 27 als EP Lager ausgebildet, so wäre in dem Turbogehäuse 56 ein zusätzlicher Kanal 62 ausgebildet.

In dieser erfindungsgemäßen Ausführung ist das Vorspannmittel 7 ein erster Magnet 4 und ein zweiter Magnet 400, beispielsweise als Permanentmagneten oder Elektromagneten ausgeführt. Der erste Magnet 4 ist in der Welle 12 angeordnet und der zweite Magnet 400 ist im Turbogehäuse 56 angeordnet und weisen eine magnetische Wechselwirkung zueinander auf. Die beiden Magneten 4, 400 können so zueinander angeordnet werden, dass sie sich gegenseitig abstoßen und so das Laufrad 1 bzw. die Welle 12 in Richtung des Axiallagers 27 vorgespannt wird (siehe Pfeil P in **Fig.5**). So kann eine resultierende Kraft auf das Laufrad 1 bzw. die Welle 12 in Richtung des Axiallagers 27 sichergestellt werden. Bei Verwendung von Elektromagneten 4, 400 kann die Kraft auf das Laufrad 1 bzw. die Welle 12 variabel eingestellt werden. In einer alternativen Ausführung kann auch einer der Magnete 4, 400, ausgebildet als Permanentmagnete, beweglich angeordnet sein, um die resultierende Kraft auf das Laufrad 1 bzw. die Welle 12 zu variieren.

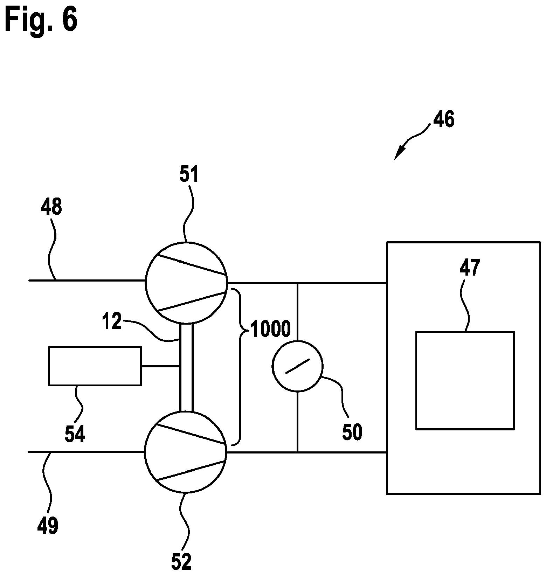

Die erfindungsgemäße Turbomaschine 100 kann auch, wie in **Fig.6** gezeigt, als Verdichter 51 in einem Brennstoffzellensystem 46 ausgebildet sein.

**Fig.6** zeigt ein aus der DE 10 2012 224 052 A1 bekanntes Brennstoffzellensystem 46 Das Brennstoffzellensystem 46 umfasst eine Brennstoffzelle 47, eine Luftzuführungsleitung 48, eine Abgasleitung 49, die als Verdichter 51 ausgebildete Turbomaschine 100, eine Abgasturbine 52, ein Bypassventil 50 zur Druckabsenkung und eine nicht näher gezeigte Zuführungsleitung für Brennstoff zu der Brennstoffzelle 47. Das Bypassventil 50 kann beispielsweise eine Regelklappe sein. Als Bypassventil 50 kann beispielsweise ein Wastegate-Ventil eingesetzt werden.

Die Brennstoffzelle 47 ist eine galvanische Zelle, die chemische Reaktionsenergie eines über die nicht gezeigte Brennstoffzuführungsleitung zugeführten Brennstoffes und eines Oxidationsmittels in elektrische Energie wandelt, das bei der hier gezeigten Ausführungsform Ansaugluft ist, die über die Luftzuführungsleitung 48 der Brennstoffzelle 47 zugeführt wird. Der Brennstoff kann vorzugsweise Wasserstoff oder Methan oder Methanol sein. Entsprechend entsteht als Abgas Wasserdampf oder Wasserdampf und Kohlendioxid. Die Brennstoffzelle 47 ist beispielsweise eingerichtet, eine Antriebsvorrichtung eines Kraftfahrzeugs anzutreiben. Beispielsweise treibt die durch die Brennstoffzelle 47 erzeugte elektrische Energie dabei einen Elektromotor des Kraftfahrzeugs an.

Der Verdichter 51 ist in der Luftzuführungsleitung 48 angeordnet. Die Abgasturbine 52 ist in der Abgasleitung 49 angeordnet. Der Verdichter 51 und die Abgasturbine 52 sind über eine Welle 12 mechanisch verbunden. Die Welle 12 ist von einer Antriebsvorrichtung 54 elektrisch antreibbar. Die Abgasturbine 52 dient der Unterstützung der Antriebsvorrichtung 54 zum Antreiben der Welle 12 bzw. des Verdichters 51. Der Verdichter 51, die Welle 12 und die Abgasturbine 52 bilden zusammen einen Turbokompressor 1000.

In alternativer Ausführung kann die Abgasturbine 52 in dem Brennstoffzellensystem 46 auch entfallen und dafür der Verdichter 51 mehrstufig ausgebildet ist.

## Patentansprüche

1. Turbomaschine (100) mit einem Turbogehäuse (56) und einem um eine Drehachse (30) beweglich gelagerten Laufrad (1), das an einer Vorderseite (20) einen Einströmbereich (8) und einen Ausströmbereich (9) eines Arbeitsmediums definiert und welches Laufrad (1) mit einer Welle (12) wirkverbunden ist, **dadurch gekennzeichnet, dass** das Laufrad (1) bzw. die Welle (12) mit dem Turbogehäuse (56) ein als einseitiges Gaslager ausgeführtes Axiallager (27) ausbildet, wobei das Laufrad (1) bzw. die Welle (12) durch ein Vorspannmittel (7) in Richtung des Axiallagers (27) vorgespannt ist, wobei das Vorspannmittel (7) einen ersten Magneten (4) und einen zweiten Magneten (400), vorzugsweise einen Permanentmagneten oder einen Elektromagneten, umfasst.

2. Turbomaschine (100) nach Anspruch 1, **dadurch gekennzeichnet, dass** der erste Magnet (4) in der Welle (12) angeordnet ist und mit dem in dem Turbogehäuse (56) angeordneten zweiten Magneten (400) magnetisch wechselwirkt.

3. Turbomaschine (100) nach Anspruch 1 oder 2, **dadurch gekennzeichnet, dass** die Magneten (4, 400) so zueinander angeordnet sind, dass sie sich gegenseitig abstoßen und so das Laufrad (1) bzw. die Welle (12) in Richtung des Axiallagers (27) vorspannen.

4. Turbomaschine (100) nach einem der vorhergehenden Ansprüche, **dadurch gekennzeichnet, dass** das Vorspannmittel einen Druckteiler umfasst, welcher als ein Absatz (22, 24) des Turbogehäuses (56) ausgebildet ist und welcher Absatz (22, 24) mit einer Rückseite (21) des Laufrads (1) einen Dichtspalt (9, 25) ausbildet.

5. Turbomaschine (100) nach einem der Ansprüche 1 bis 3, **dadurch gekennzeichnet, dass** das Vorspannmittel einen Druckteiler umfasst, welcher als mindestens ein Gleitelement (13) ausgebildet ist und zwischen einer Rückseite (21) des Laufrads (1) und dem Turbogehäuse (56) angeordnet ist.

6. Turbomaschine (100) nach Anspruch 5, **dadurch gekennzeichnet, dass** das mindestens eine Gleitelement (13) mittels einer Feder (17) mit einer Kraft in Richtung des Axialspalts (27) beaufschlagt ist.

7. Turbomaschine (100) nach einem der vorhergehenden Ansprüche, **dadurch gekennzeichnet, dass** im Ausströmbereich (9) eine Nabe (11) der Welle (12) mit einem Absatz (10) des Turbogehäuses (56) einen Axialspalt (5) ausbildet und so das Axiallager (27) für das Laufrad (1) ausbildet.

8. Turbomaschine (100) nach einem der Ansprüche 1 bis 4, **dadurch gekennzeichnet, dass** eine Rückseite (21) des Laufrads (1) mit dem Turbogehäuse (56) einen Axialspalt (5) und somit das Axiallager (27) ausbildet.

9. Turbomaschine (100) nach einem der vorhergehenden Ansprüche, **dadurch gekennzeichnet, dass** das Axiallager (27) als einseitiges Gaslager, beispielsweise Luftlager, für das Laufrad (1) ausgebildet ist.

10. Turbomaschine (100) nach einem der vorhergehenden Ansprüche, **dadurch gekennzeichnet, dass** die Welle (12) bzw. das Laufrad (1) und das Turbogehäuse (56) einen Leckageraum (14) begrenzen, welcher mit dem Axialspalt (5) verbunden ist.

11. Brennstoffzellensystem (46) mit einer Brennstoffzelle (47), einer Luftzuführungsleitung (48) zum Zuführen eines Arbeitsmediums in Form eines Oxidationsmittels in die Brennstoffzelle (47) und einer Abgasleitung (49) zum Abführen des Oxidationsmittels aus der Brennstoffzelle (47), **dadurch gekennzeichnet, dass** das Brennstoffzellensystem (46) eine als Verdichter (51) ausgebildete Turbomaschine (100) nach einem der vorhergehenden Ansprüche in der Luftzuführungsleitung (48) aufweist und eine Abgasturbine (52) in der Abgasleitung (49) angeordnet sind und die Turbomaschine (100) und die Abgasturbine (52) eine Turbomaschineneinheit (1000) bilden.

12. Abwärmerückgewinnungssystem (44) mit einem ein Arbeitsmedium führenden Kreislauf (32), wobei der Kreislauf (32) in Flussrichtung des Arbeitsmediums eine Fluidpumpe (33), einen Verdampfer (34), eine Turbomaschineneinheit (1000) und einen Kondensator (35) umfasst, wobei die Turbomaschineneinheit (1000) einen Generator (42) umfasst, **dadurch gekennzeichnet, dass** die Turbomaschineneinheit (1000) eine Turbomaschine (100) nach einem der Ansprüche 1 bis 10 umfasst.

## Claims

1. Turbomachine (100) having a turbohousing (56) and having an impeller (1) which is mounted so as to be movable about an axis of rotation (30) and which, on a front side (20), defines an inflow region (8) and an outflow region (9) of a working medium, and which impeller (1) is operatively connected to a shaft (12), **characterized in that** the impeller (1) or the shaft (12) forms with the turbohousing (56) an axial bearing (27) in the form of a one-sided gas bearing, wherein the impeller (1) or the shaft (12) is preloaded by a preloading means (7) in the direction of the axial bearing (27), wherein the preloading means (7) comprises a first magnet (4) and a second magnet (400), preferably a permanent magnet or an electromagnet.

2. Turbomachine (100) according to Claim 1, **characterized in that** the first magnet (4) is arranged in the shaft (12) and magnetically interacts with the second magnet (400), which is arranged in the turbohousing (56).

3. Turbomachine (100) according to Claim 1 or 2, **characterized in that** the magnets (4, 400) are arranged in relation to one another in such a way that they repel one another and, in this way, preload the impeller (1) or the shaft (12) in the direction of the axial bearing (27).

4. Turbomachine (100) according to one of the preceding claims, **characterized in that** the preloading means comprises a pressure distributor which is in the form of a shoulder (22, 24) of the turbohousing (56), and which shoulder (22, 24) forms with a rear side (21) of the impeller (1) a sealing gap (9, 25).

5. Turbomachine (100) according to one of Claims 1 to 3, **characterized in that** the preloading means comprises a pressure distributor which is in the form of at least one slide element (13) and which is arranged between a rear side (21) of the impeller (1) and the turbohousing (56).

6. Turbomachine (100) according to Claim 5, **characterized in that** the at least one slide element (13) is acted on by a force in the direction of the axial gap (27) by means of a spring (17).

7. Turbomachine (100) according to one of the preceding claims, **characterized in that**, in the outflow region (9), a hub (11) of the shaft (12) forms with a shoulder (10) of the turbohousing (56) an axial gap (5), and in this way the axial bearing (27) for the impeller (1).

8. Turbomachine (100) according to one Claims 1 to 4, **characterized in that** a rear side (21) of the impeller (1) forms with the turbohousing (56) an axial gap (5), and in this way the axial bearing (27) .

9. Turbomachine (100) according to one of the preceding claims, **characterized in that** the axial bearing (27) is in the form of a one-sided gas bearing, for example air bearing, for the impeller (1).

10. Turbomachine (100) according to one of the preceding claims, **characterized in that** the shaft (12) or the impeller (1) and the turbohousing (56) delimit a leakage chamber (14) which is connected to the axial gap (5).

11. Fuel-cell system (46) having a fuel cell (47), having an air-feed line (48) for feeding a working medium in the form of an oxidant into the fuel cell (47), and having an exhaust-gas line (49) for discharging the oxidant from the fuel cell (47), **characterized in that** the fuel-cell system (46) has a turbomachine (100) according to one of the preceding claims in the air-feed line (48), which turbomachine is in the form of a compressor (51), and an exhaust-gas turbine (52) is arranged in the exhaust-gas line (49), and the turbomachine (100) and the exhaust-gas turbine (52) form a turbomachine unit (1000).

12. Waste-heat-recovery system (44) having a circuit (32) which conducts a working medium, wherein the circuit (32) comprises, in the flow direction of the working medium, a fluid pump (33), an evaporator (34), a turbomachine unit (1000) and a condenser (35), wherein the turbomachine unit (1000) comprises a generator (42), **characterized in that** the turbomachine unit (1000) comprises a turbomachine (100) according to one of Claims 1 to 10.

## Revendications

1. Turbomachine (100) avec un carter de turbine (56) et une roue mobile (1) montée de manière mobile autour d'un axe de rotation (30), qui définit sur un côté avant (20) une zone d'entrée (8) et une zone de sortie (9) d'un fluide de travail et laquelle roue mobile (1) est reliée fonctionnellement à un arbre (12), **caractérisée en ce que** la roue mobile (1) ou l'arbre (12) forme avec le carter de turbine (56) un palier axial (27) réalisé sous forme de palier à gaz unilatéral, la roue mobile (1) ou l'arbre (12) étant précontraint(e) par un moyen de précontrainte (7) en direction du palier axial (27), le moyen de précontrainte (7) comprenant un premier aimant (4) et un deuxième aimant (400), de préférence un aimant permanent ou un électroaimant.

2. Turbomachine (100) selon la revendication 1, **caractérisée en ce que** le premier aimant (4) est agencé dans l'arbre (12) et interagit magnétiquement avec le deuxième aimant (400) agencé dans le carter de turbine (56) .

3. Turbomachine (100) selon la revendication 1 ou 2, **caractérisée en ce que** les aimants (4, 400) sont agencés l'un par rapport à l'autre de telle sorte qu'ils se repoussent mutuellement et précontraignent ainsi la roue mobile (1) ou l'arbre (12) en direction du palier axial (27) .

4. Turbomachine (100) selon l'une quelconque des revendications précédentes, **caractérisée en ce que** le moyen de précontrainte comprend un diviseur de pression qui est configuré sous la forme d'un épaulement (22, 24) du carter de turbine (56) et lequel épaulement (22, 24) forme une fente d'étanchéité (9, 25) avec un côté arrière (21) de la roue mobile (1).

5. Turbomachine (100) selon l'une quelconque des revendications 1 à 3, **caractérisée en ce que** le moyen de précontrainte comprend un diviseur de pression qui est configuré sous la forme d'au moins un élément coulissant (13) et qui est agencé entre un côté arrière (21) de la roue mobile (1) et le carter de turbine (56).

6. Turbomachine (100) selon la revendication 5, **caractérisée en ce que** l'au moins un élément coulissant (13) est soumis à une force en direction de la fente axiale (27) au moyen d'un ressort (17).

7. Turbomachine (100) selon l'une quelconque des revendications précédentes, **caractérisée en ce que**, dans la zone de sortie (9), un moyeu (11) de l'arbre (12) forme une fente axiale (5) avec un épaulement (10) du carter de turbine (56) et forme ainsi le palier axial (27) pour la roue mobile (1).

8. Turbomachine (100) selon l'une quelconque des revendications 1 à 4, **caractérisée en ce qu'**un côté arrière (21) de la roue mobile (1) forme avec le carter de turbine (56) une fente axiale (5) et ainsi le palier axial (27).

9. Turbomachine (100) selon l'une quelconque des revendications précédentes, **caractérisée en ce que** le palier axial (27) est configuré sous forme de palier à gaz unilatéral, par exemple de palier à air, pour la roue mobile (1).

10. Turbomachine (100) selon l'une quelconque des revendications précédentes, **caractérisée en ce que** l'arbre (12) ou la roue mobile (1) et le carter de turbine (56) délimitent un espace de fuite (14) qui est relié à la fente axiale (5).

11. Système de pile à combustible (46) avec une pile à combustible (47), une conduite d'amenée d'air (48) pour amener un fluide de travail sous la forme d'un oxydant dans la pile à combustible (47) et une conduite de gaz d'échappement (49) pour évacuer l'oxydant de la pile à combustible (47), **caractérisé en ce que** le système de pile à combustible (46) présente une turbomachine (100) selon l'une quelconque des revendications précédentes configurée sous forme de compresseur (51) dans la conduite d'amenée d'air (48) et une turbine à gaz d'échappement (52) est agencée dans la conduite de gaz d'échappement (49) et la turbomachine (100) et la turbine à gaz d'échappement (52) forment une unité de turbomachine (1000).

12. Système de récupération de chaleur résiduaire (44) avec un circuit (32) conduisant un fluide de travail, le circuit (32) comprenant, dans la direction d'écoulement du fluide de travail, une pompe à fluide (33), un évaporateur (34), une unité de turbomachine (1000) et un condenseur (35), l'unité de turbomachine (1000) comprenant un générateur (42), **caractérisé en ce que** l'unité de turbomachine (1000) comprend une turbomachine (100) selon l'une quelconque des revendications 1 à 10.
